# EUROPEAN PATENT SPECIFICATION

(11) **EP 4 215 333 B1**
(45) Date of publication and mention of the grant of the patent: **18.02.2026**
(21) Application number: 22382045.7
(22) Date of filing: 24.01.2022
(51) Int. Cl.: B29C 33/62, B29C 67/24, B29K 75/00

(54) **PROCESS FOR PREPARING AN AQUEOUS MOULD RELEASE AGENT**
VERFAHREN ZUR HERSTELLUNG EINES WÄSSRIGEN FORMTRENNMITTELS
PROCÉDÉ DE PRÉPARATION D'UN AGENT DE DÉMOULAGE AQUEUX

(43) Date of publication of application: 26.07.2023
(73) Proprietor: Productos Concentrol, S.A., 17457 Riudellots de la Selva (Girona) (ES)
(72) Inventor: Serra Pica, Joaquim, 17003 Girona (ES); Rodriguez Guitart, Angel, 17003 Girona (ES); Vidal Sanchez, Diego, 17004 Girona (ES); Nadal Soy, Josep, 17130 L'Escala (Girona) (ES)
(74) Representative: Araujo, Daniel

(56) References cited:
- EP-A1- 2 479 216
- CN-A- 110 408 275

## Description

### Technical field

The present invention relates to a process for preparing an aqueous mould release agent suitable for the manufacture of moulded polyurethane articles.

### State of the art

Polyurethane polymers are among the most important class of specialty polymers and are used in a wide array of commercial applications. The term polyurethane typically includes polyurethane foams (either flexible, rigid, or semi-rigid foams) and polyurethane elastomers, and are employed for many different applications, including automotive seating and crash pads, carpet underlay and cushions, bedding, furniture, appliance insulation, packaging, footwear, medical devices, casters and wheels, among many others, as is well known in the art, for example, as disclosed in, Szycher's Handbook of Polyurethanes, Szycher M. Editor, CRC Press, Second Edition, 2013 (ISBN: 978-1-4398-3958-4).

Many of those polyurethane products are manufactured by moulding, and therefore require the polyurethane article to be demoulded after production.

For example, polyurethane foams are generally manufactured in a batch moulding process, where the reactive components, namely, isocyanates and polyols, are premixed with catalysts and other additives and introduced into a heated mould. The mould is closed, allowing foam expansion, and the finished product is subsequently removed (demoulding).

Release agents are required for the demoulding of moulded polyurethane articles, such as polyurethane foams, in order to have an easier and cleaner removal of the polyurethane and to ensure its surface quality. Release agents are conventionally sprayed on the inner mould surface to form a thin film, before pouring the polyurethane reactive components.

Release agents typically are made up of materials such as waxes, oils, soaps, paraffins and/or silicones, dissolved or dispersed in a carrier. Release agents can be classified into two main categories based on the type of the carrier used for their formulation, namely, those based on organic solvents and water-based agents. The use of conventional solvent-based release agents entails several drawbacks, particularly from the environmental stand point, related to the emission of volatile organic compounds (VOCs) into the environment, as well as related to the flammability of said organic solvents and to the adverse effects of residual solvents. Therefore, there is an obvious interest in replacing organic solvents with water.

However, several technical difficulties have been reported in the literature associated with aqueous release systems, for example, the higher temperatures and long evaporation rates for water removal after the application of the release agent to the mould and also the occurrence of surface defects in the final polyurethane article (including bubbles, blisters, craters and voids) caused by carbon dioxide which is generated due to the competing reaction between water remaining in the mould and isocyanate groups in the polyurethane material. Furthermore, often the polyurethane product obtained therewith is greasy to the touch. The surface of polyurethane foam needs to be smooth and uniform, to ensure that it can be easily covered, with fabrics or leather, for example, in particular, for automobile industry. Moreover, the defective demoulding also affects the mould itself, which requires laborious cleaning after usage.

In the prior art there are several proposals of water-based release agent compositions for moulded polyurethane articles that try to overcome the above drawbacks.

The European patent application EP-A-0164501 discloses water-based mould release agents wherein the undesirable competing reaction between water and isocyanate during foam production can be suppressed by masking the water in the release composition through the effect of lyotropic mesomorphism. To this end, the composition is emulsified with the help of a masking aid, which is a surfactant with an HLB-value of 8 to 15, preferably, a non-ionic surfactant such as ethoxylated fatty alcohols. The compositions are prepared by heating half of the water to 95°C and successively incorporating the active substances with the suitable emulsifier, maintaining vigorous stirring throughout the process. After all the components have been added, the remaining water is incorporated, the mixture is cooled and the obtained emulsion is finally passed through a continuous flow dispergator.

The European patent application EP-A-0178525 discloses a mould release agent prepared as a dispersion of classical substances having release activity, such as waxes, soaps, oils and/or silicones in combination with polyisobutylene. The composition is prepared, typically, by adding water under high shear mixing to a mixture of the molten active substances and the emulsifier. In the European patent application EP-A-0272629 aqueous release compositions of good performance are disclosed, which comprise fatty amines as release-active substances and also comprising ammonium salts of the corresponding amines as emulsifiers.

The European patent application EP-A-0320833 focuses on aqueous mould release agents whose active release substances comprise at least a portion of one or more unsaturated oligomeric or polymeric hydrocarbons having molecular weights of at least 500, and preferably comprised between 2500 and 6000, and iodine numbers of at least 60, and preferably comprised between 150 and 600.

In the European patent application EP-A-0407636 it is disclosed that the incorporation of about 0.5 to 15 wt% of a poly(siloxane-glycol) surfactant having a cloud point of 25-50°C to a water-based mould release composition which is typically an aqueous emulsion or dispersion of the release effective substance(s) and the emulsifying agent, provides for improved surface quality of the foam product. The release agent is prepared by first melting and mixing at high agitation all the organic components in a vessel, subsequently adding first hot water and then water at ambient temperature, also under high agitation, and finally adding the poly(siloxane-glycol) surfactant when the composition is cooled to about 35°C.

The European patent application EP-A-0463421 discloses an aqueous release agent with enhanced release effect which comprises emulsifiers and active release substances (such as unsaturated hydrocarbons, oils, silicone oils, fats, and/or waxes), in combination with ethoxylated alcohols of specific formula.

Analogously, the European patent application EP-A-0463420 discloses an aqueous release agent wherein the active release substance is combined with partly or completely saponified polyvinyl acetates of specific formula.

The international patent application WO-A-99/61215 proposes using a carrier which is a mixture of at least one hydrocarbon and water, wherein said mixture is in the form of a water-in-oil (W/O) dispersion, rather than as an oil-in-water (O/W) dispersion. The composition may be obtained by firstly mixing water and a surfactant to obtain a homogeneous mixture, then preparing a second mixture comprising the hydrocarbon, the release-active substances and, optionally, other additives, and mixing both mixtures to form a dispersion.

The European patent application EP-A-1364761 discloses aqueous release agent compositions comprising a cationic surfactant which is a salt of an alkyl amine of 12 to 24 carbons, optionally ethoxylated, with an amino acid having two carboxylic groups, such as glutamic acid or aspartic acid. The composition also comprises an active release substance, typically a wax, and a forming film agent, which is a hydrocarbon compound. The composition is prepared by melting the wax and mixing with additional substances at 110-120°C, adding this mixture to an aqueous solution of the surfactant at 90°C, mixing to make an emulsion, homogenizing and cooling.

The European patent application EP-A-1785252 discloses an aqueous release agent comprising a dispersion of classical substances having release activity, such as waxes, soaps, oils and/or silicones together with polyesters, in water. The compositions typically contain other customary formulation auxiliaries and additives, such as emulsifiers, catalysts, foam stabilizers, viscosity modifiers and preservatives, for example. Preferred polyesters are esters of monobasic fatty acids with polyhydric alcohols. The dispersions are prepared following conventional processes, typically, adding the emulsifier to the molten active substances and adding the water with the further components to form the emulsion.

The European patent application EP-A-1995031 discloses aqueous release agents providing improved polyurethane foam surface, which are based on the use of an alkali or alkaline earth metal salt of an organic carboxylic acid into a conventional formulation comprising active agents (soaps, oils, waxes and/or silicones), emulsifiers and other common additives.

Preferred examples of metal carboxylates are potassium acetate, potassium octoate and mixtures thereof. The release agent can be prepared using conventional procedures, namely, mixing the melted active substance(s) with the emulsifier, then adding part of the water under high shearing force and finally adding the remaining water containing the further components under a low shearing force. A similar solution is provided in EP-A-1892073, which describes the use of bismuth carboxylates in aqueous release agent compositions.

The European patent application EP-A-2022616 discloses aqueous release agent compositions which comprise at least one metal soap and at least one polyalkylene glycol and other optional auxiliaries, for example, short alcohols such as ethanol. The release agent is prepared according to known procedures, namely, by diluting the metal soap with water and then adding the polyalkylene glycol either directly or in emulsified form, optionally together with other auxiliaries and additives.

The European patent application EP-A-2479216 discloses aqueous release agent compositions where the emulsifier is a perfluoroalkylethyl phosphonic acid salt and the active release agent is a perfluoropolyether oil.

The Chinese patent application CN-A-110408275 discloses an aqueous release agent which is a dispersion comprising 0.5-40% of at least one hydrocarbon compound; 0.001-20% of a dispersant; 0.0001-30% of an auxiliary agent; and 10-99.4989% of water; wherein the dispersion has an average particle size of 0.005-100 microns and a polydispersity of less than 5, and the melting point the hydrocarbon compound is in the range 55-140°C.

Despite the solutions suggested so far in the prior art, there is still the need of improved water-based release agents for moulded polyurethane articles, such as polyurethane foams, which are no less effective than those based on organic solvents, but without their disadvantages, and which can be easily prepared and do not require complicated formulation ingredients of preparation processes.

### Object of the invention

The object of the present invention is a process for preparing an aqueous mould release agent for moulded polyurethane production.

Another aspect of the invention is the aqueous mould release agent obtainable with this process.

Another aspect of the invention is the use of said mould release agent for the preparation of moulded polyurethane articles.

Another aspect of the invention is a process for preparing a moulded polyurethane article using said mould release agent.

### Detailed description of the invention

The object of the present invention is a process for preparing an aqueous mould release agent for moulded polyurethane production, wherein the process comprises the following steps:
i) preparing an emulsion comprising a release active substance, water, an emulsifying agent and, optionally, a hydrocarbon;
ii) homogenizing the emulsion obtained in step i) in a high-pressure homogenizer to obtain a homogenized emulsion; and
iii) homogenizing again in a high-pressure homogenizer the homogenized emulsion obtained in step ii);
wherein the homogenization of step iii) is performed at lower temperature than the homogenization of step ii), and wherein the homogenization step ii) is performed at a temperature comprised between 80°C and 95°C and the homogenization step iii) is performed at a temperature comprised between 60°C and 85°C.

The authors of the present invention have developed a process for preparing a water-based mould release agent suitable for manufacturing moulded polyurethane articles, which provides an agent with the same performance as the classical release agents based on organic solvents. Advantageously, according to the new process, the demoulding agent can be obtained using conventional ingredients and simple manufacturing technology and, surprisingly, the improved properties are obtained by performing two consecutive homogenizing steps.

Along the present description, as well as in the claims, the singular expressions, generally preceded by the articles "a", "an" or "the", are meant to include also the plural forms, unless the context clearly indicates otherwise. Furthermore, numeric values preceded by the term "about" or "approximately" are meant to include the exact stated value and also a certain variation around such value, namely a variation or ±5% of the stated amount. Numeric ranges defined by lower and upper endpoints are meant to include also said stated endpoints.

Unless otherwise stated, along the present description, as well as in the claims, the percentages disclosed (%) are always weight percentages (wt%, % w/w).

Along the present description, as well as in the claims, "mould release agent" or "release agent" or "mould release composition" or "release composition" or "demoulding agent", "demoulding composition", or other similar expressions can be used interchangeably. Analogously, the terms "aqueous" or "water-based" can be used interchangeably to qualify the release composition, meaning that water is the main ingredient of the composition.

### Step (i): preparation of the base emulsion

The first step of the process of the present invention consists in the preparation of an emulsion comprising a release active substance, water, an emulsifying agent and, optionally, a hydrocarbon.

Water is the main component of the emulsion, and amounts to about 70-98% of the final composition, preferably the amount of water is comprised between 80% and 90% of the final composition.

The release active substance typically comprises a wax, optionally in combination with an additional substance selected from silicones, oils, fats and mixtures thereof.

Any type of wax is suitable as release active substance in the composition of the present invention, for example, a natural wax such as those derived from vegetables (for example, carnauba wax, which is obtained from the leaves of the carnauba palm) or from animals (for example, beeswax); a semi-synthetic wax, such as paraffin wax, microcrystalline wax or montan wax (a mineral wax); or a synthetic wax, such as polypropylene wax, polyethylene wax, polytetrafluoroethylene wax, poly amide wax or Fischer-Tropsch wax; for example, or mixtures thereof.

In one embodiment, the wax is selected from carnauba wax, paraffin wax, microcrystalline wax, polypropylene wax, polyethylene wax, Fischer-Tropsch wax, and mixtures thereof. Optionally, oils, fats and/or silicones may be used in combination with the wax or waxes. Fats and oils may be synthetic, or from mineral, animal or vegetable sources.

In one embodiment the release active substance consists of a wax.

The amount of the release active substance is typically in the range 2-15% relative to the total weight of the final composition. Preferably, the amount of the release active substance is comprised between 3% and 12% and more preferably is comprised between 4% and 6%.

The emulsifying agent may comprise any conventional emulsifying substance. For example, the emulsifying agent may be an anionic emulsifier, such as alkyl ether carboxylates, alkyl sulfates, alkyl ether sulfates, alkyl phosphates, fatty alcohol sulfates, fatty alcohol ether sulfates or alkyl sulfosuccinates, for example; or a non-ionic emulsifier, such as ethoxylated fatty alcohols, ethoxylated alkylphenols, fatty amines or fatty acid esters with alcohols, for example; or a cationic emulsifier, such as salts of alkyl amines; or a zwitterionic emulsifier.

In one embodiment of the invention, the emulsifying agent is a cationic emulsifying agent. A preferred cationic emulsifying agent is a salt of an alkyl amine with a short carboxylic acid.

The short carboxylic acid means a low carbon carboxylic acid having a general formula R-COOH, wherein R is H (formic acid) or is a C₁-C₈ linear or branched alkyl, preferably is H or a C₁-C₄ linear or branched alkyl. Suitable examples are formic acid, acetic acid, propanoic acid, or n-butanoic acid, among others.

The alkyl amine is preferably a fatty alkyl amine, for example, a C₁₂-C₂₄ alkyl amine, preferably a C₁₄-C₁₈ alkyl amine. The fatty amine is, for example, stearylamine (octadecylamine or 1-aminooctadecane), heptadecylamine (1-aminoheptadecane), cetylamine (hexadecylamine or 1-aminohexadecane), pentadecylamine (1-aminopentadecane), myristylamine (tetradecylamine or 1-aminotetradecane), among others, or a mixture thereof.

The carboxylic acid salt of alkyl amine may be added to the emulsion mixture as such or, alternatively, the carboxylic acid and the alkyl amine may be added independently and the salt is formed *in situ.*

Suitable fatty alkyl amines, according the above definition, are available commercially from several suppliers, for example, Kao (Farmin^{®} product series), Akzo Nobel (Armeen^{®} product series) or Clariant (Genamin^{®} product series). Frequently, they are available as mixtures. The emulsifier is added in an amount generally comprised between 0.1% and 8%, preferably comprised between 0.5% and 5%, and more preferably comprised between 0.5% and 3%, relative to the total weight of the composition.

Optionally, the emulsion additionally contains between about 0.5% and about 10% of a hydrocarbon solvent. The hydrocarbon solvent is typically either a linear paraffin or a branched paraffin (iso-paraffin), and typically has a number of carbons from C₁₁ to C₂₅. Usually, they are available commercially, obtained by hydrogenating petroleum fractions, for example, hydrogenated naphtha, or by synthetic procedures, and usually are available as mixtures. The hydrocarbon solvent typically acts as a viscosity modifier by swelling the waxes in the composition.

The emulsion is prepared in a conventional manner, for example, by pouring under high shear agitation the aqueous phase onto the melted active release substances, optionally mixed with the hydrocarbon, if present in the composition.

When the composition comprises a hydrocarbon, the process is typically performed under inert atmosphere, for example, under nitrogen atmosphere.

The emulsifier is either mixed with the melted active release substances or dissolved in the water. In one embodiment, when the emulsifier is a salt of a fatty alkyl amine with a short chain carboxylic acid, preferably, the fatty alkyl amine component is mixed with the melted active release substances and the short chain carboxylic acid component is separately added, dissolved in the aqueous component.

When the emulsion also comprises a hydrocarbon, it is typically mixed with the melted active release substances.

Thus, for example, the oily phase mixture, comprising the release active substance and, optionally, also the hydrocarbon and/or the fatty amine component of the cation emulsifying system, is heated to a temperature generally comprised between about 60°C and about 120°C, preferably comprised between about 90°C and 115°C, and more preferably comprised between 100°C and 110°C. The temperature to be used generally depends on the melting point of the release active substance used, namely, the melting point of the wax, so the mixture is generally heated to about 20-25°C above the melting point of the wax.

Typically, the wax, the amine and, optionally, the hydrocarbon solvent are mixed in a suitable vessel provided with heating means and stirring means. For example, the vessel is provided with high-shear stirring means, such as a rotor-stator type stirrer, providing rotation rates of about 1500-3000 rpm, for example. Preferably, the mixing vessel is provided simultaneously with the high-shear rotor-stator type stirring and with an additional low-shear paddle type stirring, the latter providing stirring rates of about 10-60 rpm, for example.

In another vessel, the water, typically also containing the short chain carboxylic acid dissolved therein, is heated to a temperature generally comprised between 80°C and 95°C, preferably comprised between 90°C and 95°C. The aqueous phase is then poured onto the first vessel containing the melted oily phase, under stirring. For example, suitable stirring for forming the emulsion is provided with the rotor-stator mixer at about 1500-3000 rpm. Additional simultaneous low-shear mixing at about 40-60 rpm with the paddle mixer may also be used. Preferably, before submitting the obtained emulsion to homogenization, according to the step ii) of the process, the emulsion is filtered. Suitable sizes of the filter are, for example, from about 75 to about 125 microns.

### Step (ii): first homogenization

The second step of the process of the present invention consists in homogenizing the emulsion obtained in the previous step (step i)) to obtain a homogenized emulsion.

The homogenization is performed using a high-pressure homogenizer. A high-pressure homogenizer, as is well-known in the art, comprises a high-pressure pump and a homogenizing valve, so that the fluid to be homogenized is pumped at very high pressure through a narrow gap within the valve which converts its pressure energy into kinetic energy; the liquid moves at high velocity to a zone of low pressure, producing turbulences and cavitation. The high-pressure pump regulates the pressure under which the fluid will be forced at the inlet, through the narrow gap. The high-pressure homogenizers typically have one homogenization valve (single-valve assembly), but also may have more than one valves (two-valve assembly). Furthermore, there are different types of homogenization valves (e.g., radial-diffuser, counter jet or axial flow through orifice valves), and all of them are suitable to be used in the present invention (Vinchhi et al., High-pressure homogenization techniques for nanoparticles, in: Emerging Technologies for nanoparticle manufacturing, J.K. Patel and Y.V. Pathak, eds., Elsevier, 2021, Chapter 11, 263-286).

High-pressure homogenizers are widely available from several commercial suppliers. Suitable homogenizers are, for example, those provided by the companies BOS homogenisers, Bertoli (Interpump Group) or GEA Niro Soavi, among others.

High-pressure homogenizers are designed to operate at pressures ranging from 50 bar to 800 bar. Preferably, the homogenization of step ii) according to the process of the present invention is performed at a pressure at the inlet ranging from 200 bar to 600 bar, preferably from 200 bar to 500 bar, and more preferably from 200 bar to 300 bar. The lower pressure at the outlet of the constriction zone is about 50 bar, for example.

The homogenization is performed at a temperature of the mixture comprised between about 80°C and about 95°C, and preferably comprised between about 90°C and about 95°C.

### Step (iii): second homogenization

The homogenized emulsion obtained after step ii) is sent again to a high-pressure homogenizer, for a second homogenization step.

This second the homogenization step may be performed at about the same pressures as used in the first homogenization step, namely, it can be performed at a pressure ranging from 200 bar to 600 bar, preferably from 200 bar to 500 bar, and more preferably from 200 bar to 300 bar. The lower pressure at the exit of the constriction zone is about 50 bar, for example.

The same type of high-pressure homogenizer as disclosed above may be used for the second homogenization.

The first and second homogenizations are performed at different temperature. The second homogenization step is performed at lower temperature than the first one. The second homogenization is performed at a temperature comprised between about 60°C and about 85°C, preferably comprised between about 65°C and about 80°C, and more preferably comprised between about 70°C and about 75°C.

Preferably, the two homogenization steps are performed consecutively, i.e., the second homogenization step is performed on the basis of the first homogenized emulsion obtained after step ii), namely, without adding any additional component to the mixture between both homogenization steps, typically after adjusting the temperature.

After the second homogenization step, the homogenized emulsion is generally cooled, until reaching a temperature of about 20-35°C, preferably 20-25°C. For example, the emulsion is cooled using a plate heat exchanger.

### Optional additional components

Optionally, after performing the above steps i) to iii), other formulation additives may be added to the obtained demoulding composition.

Different conventional additives may be added to the demoulding composition, as are well known in the art, for example, to improve the demoulding performance of the composition, to accelerate the polyurethane reaction, to adjust the appearance and/or properties of the surface of the polyurethane article according to its intended application, or to improve the stability of the demoulding composition, for example. A non-exhaustive list of possible additives includes wetting agents, pore regulators, matting agents, skin formers, cell regulators, sound absorption additives, catalysts, preservatives or foam stabilizers, among others, and mixtures thereof.

If one or more of such additives are used, they are typically stepwise added to the already formed emulsion, under low-shear stirring, for example, with a blade-type stirrer, at about 30-100 rpm.

For example, wetting agents can be added to the mould release agent in order to improve the wetting of the inner wall of the mould. Suitable wetting agents are, for example, aliphatic alcohol ethoxylates, such as C₆-C₁₈ aliphatic alcohol ethoxylates; alkylphenol ethoxylates, such as octyl- and nonylphenol ethoxylates; among many others. Such wetting agents are well known in the art and are widely available from different commercial sources.

When a wetting agent is used, it is added to the composition in an amount comprised between about 0.1% and about 0.5%, referred to the total weight of the composition.

Matting additives may also be added to the mould releasing composition, in order to provide a matt appearance to the surface of the polyurethane foam product. A conventional matting agent is silica and, particularly pyrogenic silica. Other substances useful as matting additives are, for example some synthetic polymers, such as polymethylmethacrylate, polytetrafluoroethylene or polyamides, for example, or some natural polymers, such as cellulose or starch, for example.

When a matting agent is added, it is used generally in a proportion comprised between about 0.1% and 2%, referred to the total weight of the composition.

Suitable cell regulators are, for example, paraffins, fatty alcohols or dimethylpolysiloxanes. They can be added, for example, in an amount comprised in the range 0.1-2%, relative to the total weight of the composition. Other suitable additives are, for example, pore regulators, skin formers, sound absorption additives, which may be used in amounts ranging from about 0.1% to about 1% relative to the total weight of the composition.

A catalyst can also be added to the composition, typically, for accelerating polyurethane reaction. Typical catalysts are Lewis acids, such as tin compounds, alkali metal salts or organic bismuth salts; or Lewis bases, such as tertiary amines. Catalysts are typically added in an amount of about 0.1% to 1%, relative to the total weight of the composition.

Conventional foam stabilizers, as are well-known in the art, can be also added to the composition. Suitable foam stabilizers are, for example, polysiloxane-polyether copolymers, talc or silica.

When a foam stabilizer is used in the composition, it is added in an amount typically comprised between about 0.1% and 3%, relative to the total weight of the composition.

Preservatives include conventional agents, for example, bactericides, fungicides and/or antioxidants. Preservatives may be added in an amount typically comprised in the range 0.1-2% relative to the total weight of the composition.

Another aspect of the present invention is the aqueous mould release agent obtainable according to the process of the present invention.

### Polyurethane preparation

The mould release agent prepared according to the process of the present invention is to be used for moulded polyurethane production, i.e., for the preparation of any kind of polyurethane article manufactured by moulding. Mould manufacturing of polyurethane products, as is well-known in the art, means that the polyurethane reaction mixture is introduced into a mould cavity where the reaction mixture is cured to produce the polyurethane article, which is subsequently demoulded, i.e., removed from the mould.

Moulded polyurethane typically includes polyurethane foams (either flexible, rigid, or semi-rigid foams) and polyurethane elastomers. The use of release agents is particularly necessary for the manufacture of moulded polyurethane foam, as it is less dense and, therefore, more fragile that compact polyurethane elastomer and is more easily damaged when it is demoulded.

The mould release agent can be used in a customary way, for the preparation of any kind of moulded polyurethane article. For example, it may be used for the preparation of polyurethane foam.

Another aspect of the invention is, therefore, the use of the mould release agent obtainable with the process of the present invention for preparing a moulded polyurethane article. Another aspect of the invention is a process for preparing a moulded polyurethane article comprising the steps of:
a) applying a release agent on the inside surface of the mould;
b) introducing the polyurethane reaction mixture in the mould; and
c) curing the polyurethane;
wherein the release agent is prepared according to the process of the present invention, as disclosed above.

The demoulding agent is applied to the inside surface of the mould in a conventional way, usually, by spraying it, so that a uniform thin film covers the inner surface of the mould. Even if spraying is the preferred method for applying the release composition, other methods of application may be also suitable, for example, wiping or pouring, as long as a thin and uniform film of the composition may be deposited on the surface of the mould. The release composition is applied in an amount sufficient to provide the desired mould release properties, for example, amounts of about 20 g/m² to about 30 g/m² are usually employed.

Before applying the release composition, the mould is generally heated to a temperature comprised between 40°C and 80°C, preferably comprised between 50°C and 75°C. The mould, as is well-known in the art, may be metallic or non-metallic, for example, aluminium and steel moulds are frequently used.

The polyurethane article is then manufactured following standard process and using conventional reactants, as are well-known to the skilled in the art, for example, as disclosed in the book Szycher's Handbook of Polyurethanes, Szycher M. Editor, CRC Press, Second Edition, 2013; or in the book "Polymeric foams, Mechanisms and Materials", S.T. Lee and N.S. Ramesh, Ed., 2004, CRC Press; or in the book "Practical Guide to Flexible Polyurethane Foams", C. Defonseka Ed., 2013, Smithers Rapra Technology.

Typically, the polyurethane reaction mixture is introduced in the mould in a conventional way, for example, by pouring it in the open mould, which is subsequently closed with the lid, or the reaction mixture may be injected in the closed mould though a small opening or injection port. The ingredients of such reaction mixture comprise polyols (polyether or ester based) and polyisocyanates (typically, methylenediphenyl diisocyanate (MDI) and/or toluene diisocyanate (TDI)) and, optionally, also further additives, such as blowing agents (water and methylene chloride), catalysts (amine and tin base), crosslinkers (low-molecular-weight polyols or polyamines, for example, diethanolamine) or silicon surfactants. Further optional additives include pigments, fillers, flame retardants, antioxidants, cell openers, plasticizers, anti-bacterial agents, anti-static agents, colourants and foam stabilizers.

The polyurethane is then cured in a conventional manner at a temperature and curing time which are adjusted according to the specific type of polyurethane to be produced, as is well known to the skilled in the art. Finally, the obtained polyurethane article is demoulded, i.e., it is released from the mould.

As shown in Example 3, an aqueous demoulding composition according to the present invention was compared with an aqueous demoulding composition comprising exactly the same ingredients but prepared by a conventional process, as disclosed in the prior art, involving only one homogenizing step. Surprisingly, the polyurethane foam obtained with the aqueous demoulding agent of the present invention provides better performance as it allows easier demoulding of the foam, which is comparable to the performance of conventional solvent-based demoulding agents. A quick, easy demoulding of the polyurethane articles is essential for achieving the necessary productivity rates in polyurethane manufacturing at industrial scale. Furthermore, the losses and/or repairs due to defective foam material are significantly reduced when the new demoulding agent is used. The polyurethane products obtained therewith show also excellent stability and durability.

Surprisingly, those improvements are achieved by simply adding an additional homogenization step, and no special formulation ingredients or complex manufacturing steps were required. Polyurethane articles with dry, non-greasy touch may be obtained with the demoulding agent of the invention, comparable to those articles obtained using conventional solvent-based release agents, with analogous demoulding efficiency. Therefore, the aqueous mould release agent of the present invention provides analogous demoulding performance than the conventional solvent-based release agents, with the advantage of avoiding the use of organic solvents, which is desirable for avoiding the emission of volatile organic compounds (VOCs) into the environment, and also for avoiding the flammability and adverse effects of said organic solvents.

The demoulding composition of the present invention may be used for preparing any kind of polyurethane article, for any of its conventional applications, as are well-known in the art. Some examples of moulded polyurethane articles obtainable with the present demoulding composition are, for example, automobile crash pads, automobile window encapsulates, automobile seating, arm rests, head rests, steering wheels, carpet underlay and cushions, bedding, furniture, sound and thermic insulation for buildings and appliances, packaging, footwear, shoe soles, medical devices, casters and wheels, among many others.

### Examples

### Example 1: Preparation of a mould release agent using the process of the present invention

Several mould release agent compositions (A to D) were prepared according to the process of the present invention, using the ingredients listed in Table 1 below (amounts in weight percentage):

**TABLE 1**

| *Ingredients* | **1A** | **1B** | **1C** | **1D** |
|---|---|---|---|---|
| Polyethylene wax | 2.00 | 2.00 | 2.00 | 2.00 |
| Microcrystalline wax | 1.00 | 2.50 | 1.00 | 2.50 |
| Carnauba wax | 1.00 | - | 1.00 | - |
| stearylamine | 1.00 | 1.00 | - | - |
| cetylamine | - | - | 1.00 | 1.00 |
| acetic acid 80% | 0.28 | 0.28 | 0.28 | 0.28 |
| C₁₃-C₁₄ isoparaffin | 2.00 | - | - | 3.00 |
| water | 92.72 | 94.22 | 94.72 | 91.22 |

All the compositions were prepared using analogous processes. The waxes, the amine and, when present, isoparaffin solvent, were introduced in a vessel provided with a high-shear rotor-stator mixer (Utra-Turrax) and with a low-shear paddle mixer (anchor stirrer at 10-50 rpm), heating and cooling jacket, and adapted to operate under pressurized or vacuum conditions. Under nitrogen atmosphere, the mixture was heated to 100-110°C.

In another analogous vessel, water was mixed with acetic acid and heated to 90-95°C. This aqueous solution of acetic acid was poured into the first vessel containing the melted waxes under continuous stirring (Ultra-Turrax mixer at 1500-3000 rpm and anchor stirrer at 10-50 rpm), maintaining the temperature in the receiving vessel at about 90°C during the process. The resulting emulsion was then passed through a 100-micron filter, and was subsequently sent to a high-pressure homogenizer (Bertoli, Model HA/PA 30), using a pressure of 200-400 bars at the inlet and 50 bar at the outlet. The homogenized emulsion exiting from the homogenizer was collected in another vessel with heating/cooling jacket, and the mixture was there cooled to 70-80°C.

At this point, the mixture at was sent again to the homogenizer, operating again at the same pressures as stated above for the first homogenization, but at a lower temperature, maintaining now the temperature at 70-80°C.

The twice homogenized emulsion was immediately sent to another vessel and cooled using a plate heat exchanger, to about 20-25°C.

### Example 2: Comparative formulations

Comparative formulations 2A, 2B, 2C and 2D were prepared using exactly the same ingredients listed in Table 1 for formulations 1A, 1B, 1C and 1D, respectively. The process used was also analogous except in that only one homogenizing step was performed, so after the first homogenizing step, the emulsion was sent to a receiving vessel and cooled to about 20-25°C.

### Example 3: Polyurethane foam manufacture

Comparative pieces of polyurethane foam were prepared using the releasing agents of the invention 1A, 1B, 1C and 1D, prepared according to Example 1, and the comparative ones 2A, 2B, 2C and 2D, prepared according to Example 2.

The release agents were uniformly sprayed with a spray gun (product pressure 1 bar / air pressure 2.5 bars) in amounts of about 30 g/m² onto the inner walls of metal test moulds, heated at about 60°C, and were allowed to dry during 60 seconds before adding the polyurethane mixture. Then, the polyurethane reaction mixture was injected into the mould. The polyurethane reaction mixture was made of 100 parts of mixture A (comprising a polyether-based polyol, amine-based catalyst and additives, see table below) and 55 parts of diphenylmethane diisocyanate MDI (Iso 123/16 Isocyanate component from BASF).

### Mixture A

| *Chemical name* | *Tradename (Supplier)* | wt % |
|---|---|---|
| Trifunctional Polyether Polyol (MW 6000) | LUPRANOL^{®} 2090 (BASF) | 86.96 |
| Trifunctional Polyether Polyol | LUPRANOL^{®} 2048 (BASF) | 6.09 |
| Tertiary amine-based catalyst | TEGOAMIN^{®} 33 (Evonik) | 0.30 |
| *N*-(3-dimethylaminopropyl)-*N*,*N-*diisopropanolamine | JEFFCAT^{®} DPA (Huntsman) | 1.13 |
| Polyether- polysiloxane | CONCENTROL STB PU^{®} 1239 (Concentrol) | 0.26 |
| Polyether- polysiloxane | CONCENTROL STB PU^{®} 1257 (Concentrol) | 0.14 |
| Glycerin | Glycerin (Brenntag) | 0.86 |
| Water | | 4.26 |

The mould with the polyurethane mixture was kept at 60°C for 120 minutes, the lid was opened and the polyurethane foam was released from the mould. For measuring the releasing effect, the force required for detaching the foam from the mould was measured using an electronic dynamometer.

The pieces of polyurethane foam obtained were compared, based on the following characteristics:
a) Force required for demoulding (newtons).
b) Discarded defective polyurethane product (% relative to total polyurethane weight).

| | **Products 1A-1D** | **Comparative 2A-2D** |
|---|---|---|
| a) | 2.2-2.5 N | 4.5-7.0 N |
| b) | 0.5-1.5 % | 5-15 % |

It can be observed that when the release agents of the invention (1A-1D) were used, less force was needed for releasing the foam from the mould, compared to the releasing agents prepared with conventional process, so easier demoulding of moulded polyurethane pieces is provided. The force required for demoulding when the products of the invention (1A-1D) were used was similar to that required when a standard solvent-based demoulding agent is used.

On the other hand, there was significantly less discarded defective/damaged polyurethane with the new releasing agent, compared to a water-based agent prepared with a conventional process.

## Claims

1. Process for preparing an aqueous mould release agent for moulded polyurethane production, wherein the process comprises the following steps:
i) preparing an emulsion comprising a release active substance, water, an emulsifying agent and, optionally, a hydrocarbon;
ii) homogenizing the emulsion obtained in step i) in a high-pressure homogenizer to obtain a homogenized emulsion; and
iii) homogenizing again in a high-pressure homogenizer the homogenized emulsion obtained in step ii);
wherein the homogenization of step iii) is performed at lower temperature than the homogenization of step ii), and wherein the homogenization step ii) is performed at a temperature comprised between 80°C and 95°C and the homogenization step iii) is performed at a temperature comprised between 60°C and 85°C.

2. Process according to claim 1, **characterized in that** the amount of water is comprised between 70% and 98%, preferably comprised between 80% and 90%, relative to the total weight of the mould release agent.

3. Process according to claims 1 or 2, **characterized in that** the release active substance comprises a wax, optionally in combination with an additional substance selected from silicones, oils, fats and mixtures thereof.

4. Process according to claim 3, **characterized in that** the wax is selected from carnauba wax, paraffin wax, microcrystalline wax, polypropylene wax, polyethylene wax, Fischer-Tropsch wax, and mixtures thereof.

5. Process according to any one of claims 1 to 4, **characterized in that** the amount of release active substance is comprised between 2% and 15%, preferably comprised between 3% and 12%, and still more preferably comprised between 4% and 6%, relative to the total weight of the mould release agent.

6. Process according to any one of claims 1 to 5, **characterized in that** the emulsifier is a cationic emulsifier, preferably is a salt of an alkyl amine with a short carboxylic acid.

7. Process according to claim 6, **characterized in that** the short carboxylic acid has a general formula R-COOH, wherein R is H or is a C₁-C₈ linear or branched alkyl, preferably is R is H or a C₁-C₄ linear or branched alkyl, and more preferably the short carboxylic acid is selected from formic acid, acetic acid, propanoic acid and n-butanoic acid; and the alkyl amine is a C₁₂-C₂₄ fatty alkyl amine, preferably is a C₁₄-C₁₈ fatty alkyl amine.

8. Process according to any one of claims 1 to 7, **characterized in that** the emulsifier is added in an amount comprised between 0.1% and 8%, preferably comprised between 0.5% and 5%, and more preferably comprised between 0.5% and 3%, relative to the total weight of the mould release agent.

9. Process according to any one of claims 1 to 8, **characterized in that** the emulsion in step i) also comprises from about 0.5% to about 10% of a hydrocarbon solvent.

10. Process according to any one of claims 1 to 9, **characterized in that** the emulsion in step i) is prepared by adding under stirring the aqueous phase over the melted active substances, optionally mixed with the hydrocarbon, if present.

11. Process according to any one of claims 1 to 10, **characterized in that** the homogenization in steps ii) and iii) is performed in a high-pressure homogenizer, wherein the pressure at inlet is comprised between 200 bar and 600 bar, preferably comprised between 200 bar and 500 bar, and more preferably comprised between 200 bar and 300 bar.

12. Process according to any one of claims 1 to 11, **characterized in that** the homogenization step ii) is performed at a temperature comprised between 90°C and 95°C and the homogenization step iii) is performed at a temperature comprised between 65°C and 80°C, preferably comprised between 70°C and 75°C.

13. Mould release agent obtainable according to any one of claims 1 to 12.

14. Use of the mould release agent of claim 13 for the preparation of moulded polyurethane articles.

15. A process for preparing moulded polyurethane foam comprising the steps of:
(a) applying the release agent of claim 13 on the inside surface of the mould;
(b) introducing the polyurethane reaction mixture in the mould; and
(c) curing the polyurethane.

## Patentansprüche

1. Verfahren zur Herstellung eines wässrigen Formtrennmittels für die Produktion von geformtem Polyurethan, wobei das Verfahren folgende Schritte umfasst:
i) Herstellen einer Emulsion, umfassend eine trennaktive Substanz, Wasser, einen Emulgator und, gegebenenfalls, einen Kohlenwasserstoff;
ii) Homogenisieren der in Schritt i) erhaltenen Emulsion in einem Hochdruckhomogenisator, um eine homogenisierte Emulsion zu erlangen; und
iii) erneutes Homogenisieren der in Schritt ii) erlangten homogenisierten Emulsion in einem Hochdruckhomogenisator;
wobei die Homogenisierung von Schritt iii) bei einer niedrigeren Temperatur als die Homogenisierung von Schritt ii) durchgeführt wird, und wobei der Homogenisierungsschritt ii) bei einer Temperatur durchgeführt wird, die zwischen 80 °C und 95 °C umfasst und der Homogenisierungsschritt iii) bei einer Temperatur durchgeführt wird, die zwischen 60 °C und 85 °C umfasst.

2. Verfahren nach Anspruch 1, **dadurch gekennzeichnet, dass** die Menge an Wasser zwischen 70 % und 98 %, vorzugsweise zwischen 80 % und 90 %, bezogen auf das Gesamtgewicht des Formtrennmittels, umfasst.

3. Verfahren nach Anspruch 1 oder 2, **dadurch gekennzeichnet, dass** die trennaktive Substanz ein Wachs umfasst, gegebenenfalls in Kombination mit einer zusätzlichen Substanz, ausgewählt aus Silikonen, Ölen, Fetten und Gemischen davon.

4. Verfahren nach Anspruch 3, **dadurch gekennzeichnet, dass** das Wachs ausgewählt ist aus Carnaubawachs, Paraffinwachs, mikrokristallinem Wachs, Polypropylenwachs, Polyethylenwachs, Fischer-Tropsch-Wachs und Gemischen davon.

5. Verfahren nach einem der Ansprüche 1 bis 4, **dadurch gekennzeichnet, dass** die Menge der trennaktiven Substanz zwischen 2 % und 15 %, vorzugsweise zwischen 3 % und 12 % und noch bevorzugter zwischen 4 % und 6 %, bezogen auf das Gesamtgewicht des Formtrennmittels, umfasst.

6. Verfahren nach einem der Ansprüche 1 bis 5, **dadurch gekennzeichnet, dass** der Emulgator ein kationischer Emulgator, vorzugsweise ein Salz eines Alkylamins mit einer kurzen Carbonsäure ist.

7. Verfahren nach Anspruch 6, **dadurch gekennzeichnet, dass** die kurze Carbonsäure eine allgemeine Formel R-COOH aufweist, wobei R H oder ein geradkettiges oder verzweigtes C₁-C₈-Alkyl ist, vorzugsweise R H oder ein geradkettiges oder verzweigtes C₁-C₄-Alkyl ist, und noch bevorzugter die kurze Carbonsäure aus Ameisensäure, Essigsäure, Propansäure und n-Butansäure ausgewählt ist; und das Alkylamin ein C₁₂-C₂₄-Fettalkylamin, vorzugsweise ein C₁₄-C₁₈-Fettalkylamin ist.

8. Verfahren nach einem der Ansprüche 1 bis 7, **dadurch gekennzeichnet, dass** der Emulgator in einer Menge hinzugefügt wird, die zwischen 0,1 % und 8 %, vorzugsweise zwischen 0,5 % und 5 %, und noch bevorzugter zwischen 0,5 % und 3 %, bezogen auf das Gesamtgewicht des Formtrennmittels, umfasst.

9. Verfahren nach einem der Ansprüche 1 bis 8, **dadurch gekennzeichnet, dass** die Emulsion in Schritt i) auch etwa 0,5 % bis etwa 10 % eines Kohlenwasserstofflösungsmittels umfasst.

10. Verfahren nach einem der Ansprüche 1 bis 9, **dadurch gekennzeichnet, dass** die Emulsion in Schritt i) durch Hinzufügen der wässrigen Phase unter Rühren über die geschmolzenen Wirkstoffe, gegebenenfalls gemischt mit dem Kohlenwasserstoff, falls vorhanden, hergestellt wird.

11. Verfahren nach einem der Ansprüche 1 bis 10, **dadurch gekennzeichnet, dass** die Homogenisierung in Schritt ii) und iii) in einem Hochdruckhomogenisator durchgeführt wird, wobei der Druck am Einlass zwischen 200 bar und 600 bar, vorzugsweise zwischen 200 bar und 500 bar, und noch bevorzugter zwischen 200 bar und 300 bar umfasst.

12. Verfahren nach einem der Ansprüche 1 bis 11, **dadurch gekennzeichnet, dass** der Homogenisierungsschritt ii) bei einer Temperatur durchgeführt wird, die zwischen 90 °C und 95 °C umfasst, und der Homogenisierungsschritt iii) bei einer Temperatur durchgeführt wird, die zwischen 65 °C und 80 °C, vorzugsweise zwischen 70 °C und 75 °C, umfasst.

13. Formentrennmittel, erhältlich nach einem der Ansprüche 1 bis 12.

14. Verwendung des Formtrennmittels nach Anspruch 13 zur Herstellung von geformten Polyurethanartikeln.

15. Verfahren zur Herstellung von geformtem Polyurethanschaum, umfassend die Schritte:
(a) Auftragen des Trennmittels nach Anspruch 13 auf die innere Oberfläche der Form;
(b) Einführen des Polyurethanreaktionsgemisches in die Form; und
(c)Aushärten des Polyurethans.

## Revendications

1. Procédé de préparation d'un agent aqueux de démoulage pour la production de polyuréthane moulé, dans lequel le procédé comprend les étapes suivantes :
i) la préparation d'une émulsion comprenant une substance active de libération, de l'eau, un agent émulsifiant et, optionnellement, un hydrocarbure ;
ii) l'homogénéisation de l'émulsion obtenue à l'étape i) dans un homogénéisateur à haute pression pour obtenir une émulsion homogénéisée ; et
iii) l'homogénéisation à nouveau dans un homogénéisateur à haute pression de l'émulsion homogénéisée obtenue à l'étape ii) ;
dans lequel l'homogénéisation de l'étape iii) est effectuée à une température plus basse que celle de l'homogénéisation de l'étape ii), et dans lequel l'homogénéisation de l'étape ii) est effectuée à une température comprise entre 80 °C et 95 °C et l'homogénéisation de l'étape iii) est effectuée à une température comprise entre 60 °C et 85 °C.

2. Procédé selon la revendication 1, **caractérisé en ce que** la quantité d'eau est comprise entre 70 % et 98 %, de préférence comprise entre 80 % et 90 %, par rapport au poids total de l'agent de démoulage.

3. Procédé selon les revendications 1 ou 2, **caractérisé en ce que** la substance active de libération comprend une cire, éventuellement en combinaison avec une substance supplémentaire choisie parmi les silicones, les huiles, les graisses et leurs mélanges.

4. Procédé selon la revendication 3, **caractérisé en ce que** la cire est choisie parmi la cire de carnauba, la cire de paraffine, la cire microcristalline, la cire de polypropylène, la cire de polyéthylène, la cire Fischer-Tropsch, et leurs mélanges.

5. Procédé selon l'une quelconque des revendications 1 à 4, **caractérisé en ce que** la quantité de substance active de libération est comprise entre 2 % et 15 %, de préférence comprise entre 3 % et 12 %, et encore plus préférentiellement comprise entre 4 % et 6 %, par rapport au poids total de l'agent de démoulage.

6. Procédé selon l'une quelconque des revendications 1 à 5, **caractérisé en ce que** l'émulsifiant est un émulsifiant cationique, est de préférence un sel d'une alkylamine avec un acide carboxylique court.

7. Procédé selon la revendication 6, **caractérisé en ce que** l'acide carboxylique court a une formule générale R-COOH, dans lequel R est H ou est un alkyle linéaire ou ramifié en C₁-C₈, de préférence R est H ou un alkyle linéaire ou ramifié en C₁-C₄, et plus préférablement l'acide carboxylique court est choisi parmi l'acide formique, l'acide acétique, l'acide propanoïque et l'acide n-butanoïque ; et l'alkylamine est une alkylamine grasse en C₁₂-C₂₄, est de préférence une alkylamine grasse en C₁₄-C₁₈.

8. Procédé selon l'une quelconque des revendications 1 à 7, **caractérisé en ce que** l'émulsifiant est ajouté en une quantité comprise entre 0,1 % et 8 %, de préférence comprise entre 0,5 % et 5 %, et plus préférentiellement comprise entre 0,5 % et 3 %, par rapport au poids total de l'agent de démoulage.

9. Procédé selon l'une quelconque des revendications 1 à 8, **caractérisé en ce que** l'émulsion dans l'étape i) comprend également d'environ 0,5 % à environ 10 % d'un solvant hydrocarboné.

10. Procédé selon l'une quelconque des revendications 1 à 9, **caractérisé en ce que** l'émulsion dans l'étape i) est préparée en ajoutant sous agitation la phase aqueuse sur les substances actives fondues, éventuellement mélangé à l'hydrocarbure, s'il est présent.

11. Procédé selon l'une quelconque des revendications 1 à 10, **caractérisé en ce que** l'homogénéisation dans les étapes ii) et iii) est effectuée dans un homogénéisateur à haute pression, dans lequel la pression au niveau de l'entrée est comprise entre 200 bars et 600 bars, de préférence comprise entre 200 bars et 500 bars, et plus préférentiellement comprise entre 200 bars et 300 bars.

12. Procédé selon l'une quelconque des revendications 1 à 11, **caractérisé en ce que** l'étape d'homogénéisation ii) est effectuée à une température comprise entre 90 °C et 95 °C et que l'étape d'homogénéisation iii) est effectuée à une température comprise entre 65 °C et 80 °C, de préférence comprise entre 70 °C et 75 °C.

13. Agent de démoulage pouvant être obtenu selon l'une quelconque des revendications 1 à 12.

14. Utilisation de l'agent de démoulage selon la revendication 13 pour la préparation d'articles moulés en polyuréthane.

15. Procédé de préparation de mousse de polyuréthane moulée comprenant les étapes consistant à :
(a) appliquer l'agent de démoulage selon la revendication 13 sur la surface intérieure du moule ;
(b) introduire le mélange réactionnel de polyuréthane dans le moule ; et
(c) durcir le polyuréthane.
